# EUROPEAN PATENT SPECIFICATION

(11) **EP 1 919 633 B1**
(45) Date of publication and mention of the grant of the patent: **26.07.2017**
(21) Application number: 05850713.8
(22) Date of filing: 28.12.2005
(51) Int. Cl.: B06B 3/00

(54) **ULTRASOUND SEALING DEVICE COMPRISING AN ACTIVATING DEVICE AND A SONOTRODE**
EINE AKTIVIERUNGSVORRICHTUNG UND EINE SONOTRODE UMFASSENDE ULTRASCHALLSIEGELVORRICHTUNG
DISPOSITIF DE SCELLAGE PAR ULTRASONS COMPRENANT UN DISPOSITIF D ACTIVATION ET UNE SONOTRODE

(30) Priority: 29.07.2005 IT BO20050510
(43) Date of publication of application: 14.05.2008
(73) Proprietor: AZIONARIA COSTRUZIONI MACCHINE AUTOMATICHE-A.C.M.A.-S.p.A., 40131 Bologna (IT)
(72) Inventor: GHIOTTI, Roberto, I-40050 Calderino di Monte San Pietro (IT); POLUZZI, Elena c/o Azionaria Costruzioni Macchine, I-40131 Bologna (IT); BOLDRINI, Fulvio, I-44100 Ferrara (IT)
(74) Representative: Bergadano, Mirko
(86) International application number: PCT/IB2005/003887
(87) International publication number: WO 2007/012916

(56) References cited:
- DE-A1- 19 706 018
- US-A- 3 368 085

## Description

### TECHNICAL FIELD

The present invention relates to an ultrasound sealing device.

Ultrasound sealing devices transmit vibrations with a given wavelength L, and comprise an activating device - which may be a converter, a booster, or a pack of plates of ceramic piezoelectric material - and a sonotrode in series with each other. The activating device and the sonotrode each have a respective length L/2; and a respective substantially flat intermediate surface coincident with a nodal surface.

### BACKGROUND ART

Known sealing devices of the above type normally have a total length equal to a multiple of L/2, and extend through a support, to which they are connected at the periphery of the sonotrode nodal surface; and the vibration wave has a first maximum, of a given value M, at a free end of the activating device coincident with a surface connecting the activating device to the sonotrode, and a second maximum, of a value MM, greater than M according to a given amplification ratio G depending on the shape and material of the sonotrode, at the free or active end of the sonotrode.

Ultrasound sealing devices of the above type have several drawbacks, firstly on account of their minimum length L, which makes them too bulky for certain applications, especially those in which the sealing devices are mounted to rotate about an axis; and secondly on account of the impossibility of adjusting value MM without changing value M, i.e. without adjusting or changing the activating device.

An attempt has been made to solve the first drawback (see, for example, US-6,153,964) by producing an ultrasound sealing device of length L/2 by inserting the activating device completely inside the resonator or counterweight of the sonotrode, and connecting the activating device to the sonotrode at the sonotrode nodal surface. Such a solution, however, obviously in no way allows for adjusting value MM without changing value M.

DE19706018A1 discloses an amplitude amplifier for mechanical amplification of ultrasonic amplitudes; the amplifier has a lambda /2 oscillator which has a sonic transducer or sonotrode connected to it, off its oscillation maximum.

US3368085A1 discloses a piezoelectric sonic transducer.

### DISCLOSURE OF INVENTION

It is an object of the present invention to provide an ultrasound sealing device designed to eliminate the aforementioned drawbacks.

According to the present invention, there is provided an ultrasound sealing device as claimed in the accompanying Claims.

### BRIEF DESCRIPTION OF THE DRAWINGS

A number of non-limiting embodiments of the present invention will be described with reference to the accompanying drawings, in which:
Figure 1 shows a schematic side view of a known ultrasound sealing device;
Figures 2, 3 and 4 show schematic, partly sectioned side views of comparative examples and a preferred embodiment of the ultrasound sealing device according to the present invention.

### BEST MODE FOR CARRYING OUT THE INVENTION

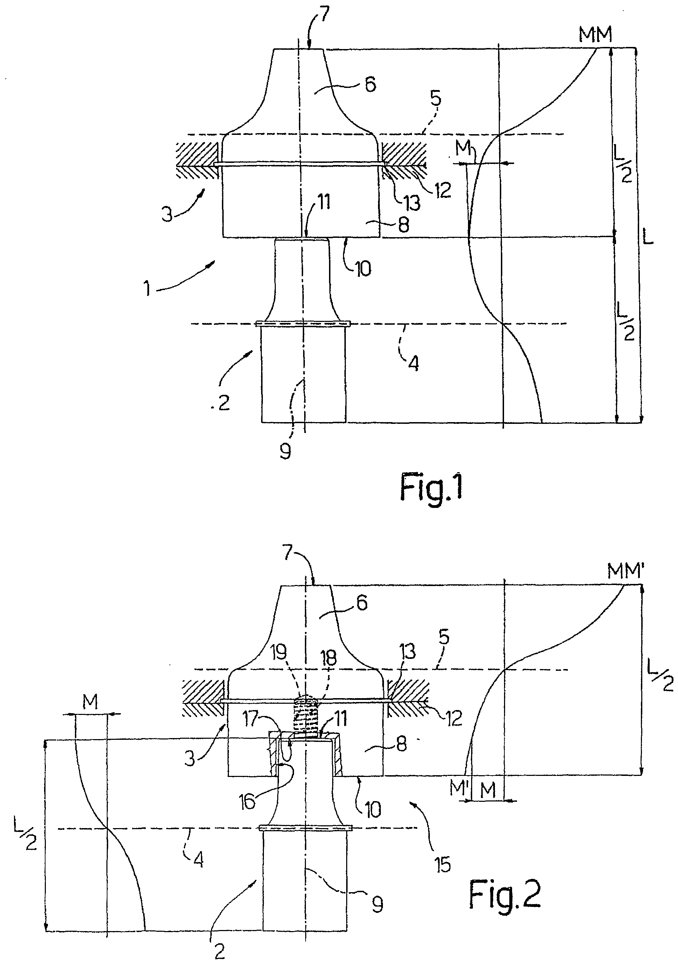

Number 1 in Figure 1 indicates as a whole a known ultrasound sealing device for transmitting vibrations with a given wavelength L, and comprising an activating device 2 - which may be a converter, a booster, or a pack of plates of ceramic piezoelectric material - and a sonotrode 3 in series with each other. Activating device 2 and sonotrode 3 each have a respective length L/2, and a respective substantially flat intermediate nodal surface indicated 4 for activating device 2 and 5 for sonotrode 3.

In sealing device 1, sonotrode 3 comprises a tapering horn 6 having a free end surface defining an active surface 7 of sealing device 1; and a counterweight 8 coaxial with horn 6 along an axis 9 crosswise to nodal surfaces 4 and 5. Counterweight 8 is connected to horn 6 at nodal surface 5, and is bounded at the other end by a free surface 10 directly contacting a free end surface 11 of activating device 2.

Sealing device 1 has a total length L, and extends through a support 12, to which sealing device 1 is connected by a projection 13 extending outwards from sonotrode 3, substantially close to nodal surface 5. More specifically, projection 13 is connected to the end of counterweight 8 adjacent to nodal surface 5, and is shifted slightly, with respect to nodal surface 5, towards counterweight 8. In an embodiment not shown, counterweight 8 may not be coaxial with horn 6, and/or projection 13 may be connected to horn 6 as opposed to counterweight 8.

The vibration wave has a first maximum, of a given value M, at surfaces 10 and 11; and a second maximum, of a value MM, greater than M according to a given amplification ratio G depending on the shape and material of horn 6, at active surface 7 of sonotrode 3.

In sealing device 1 : MM = M*G

And value MM cannot be changed without changing value M. The comparative example in Figure 2 relates to a sealing device 15, in which activating device 2 and sonotrode 3 are substantially identical to activating device 2 and sonotrode 3 of sealing device 1, and are coaxial with axis 9, but in which counterweight 8 has a cavity 16 formed through free surface 10, coaxial with axis 9, and bounded by an end surface 17 located on the same side of nodal surface 5 as nodal surface 4, and at a distance from nodal surface 5 of more than zero and less than L/4.

Activating device 2 is connected to sonotrode 3 by a threaded appendix 18 projecting coaxially with axis 9 from surface 11 and engaging a threaded hole 19 formed through end surface 17, and is inserted partly inside cavity 16 so that free surface 11 contacts end surface 17. This serves the dual purpose of achieving a sealing device 15 of a total length equal to L minus the depth of cavity 16, and of transmitting vibration of amplitude M to sonotrode 3, not at free surface 10, but at surface 17 closer to nodal surface 5 than free surface 10. Consequently, since gain G depends solely on the form and material of horn 6, sonotrode 3 of sealing device 15 will have an input maximum M' greater than M, and an output maximum MM' greater than MM, using the same horn 6 as in sealing device 1.

Since value MM' obviously increases as the distance between surfaces 17 and 5 decreases, value MM' can be adjusted independently of value M by adjusting said distance, which must obviously be adjusted in such a manner as to prevent value MM' resulting in yield and/or breakage of horn 6.

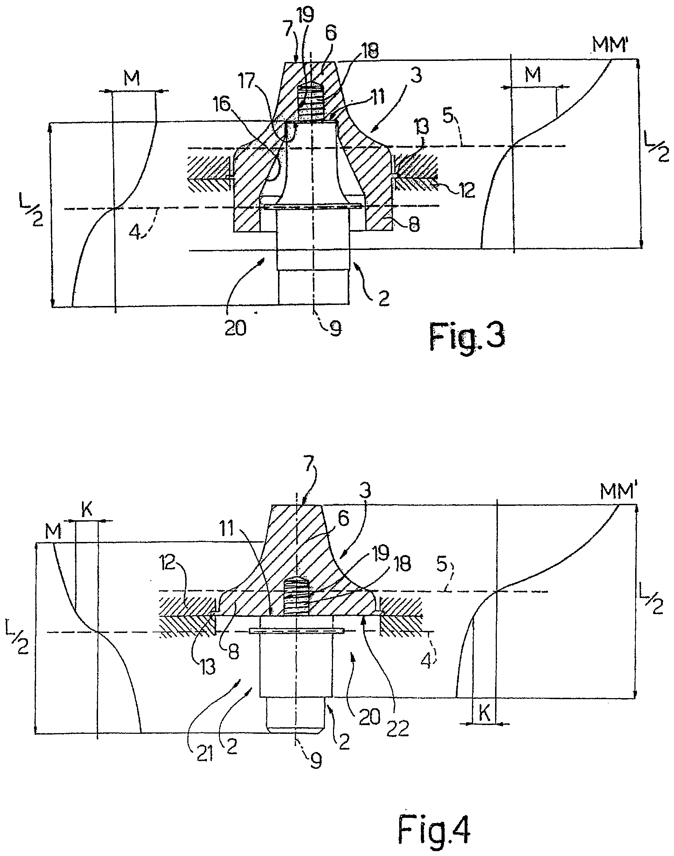

Similar results, but with an even greater reduction in total length, are achieved by sealing device 20 in the embodiment of Figure 3, in which sonotrode 3 is less than L/2 in length, and cavity 16 is deep enough to extend through and beyond nodal surface 5. In this case, end surface 17 is still located at a distance from nodal surface 5 of more than zero and less than L/4, but on the opposite side of nodal surface 5 to nodal surface 4.

Similar results, but with an even greater reduction in total length, are achieved by sealing device 21 in the comparative example of Figure 4, in which activating device 2 and sonotrode 3 have respective lengths of less than L/2, the length of counterweight 8 is reduced to a minimum, cavity 16 of sealing device 20 is eliminated, and free surface 11 contacts a free surface 22 located between nodal surfaces 4 and 5 and at a distance from nodal surface 5 of more than zero and less than L/4.

In this case, as opposed to an amplitude M, an intermediate point on the oscillation curve of sonotrode 3, located at free surface 22, is imparted the amplitude K<M of the point on the oscillation curve of activating device 2 located at free surface 11.

## Claims

1. An ultrasound sealing device (20) comprising:
an activating device (2), which generates vibrations of a wavelength of a given value L, and has a first surface (11); and
a sonotrode (3) having a second surface (17) and connected to the activating device (2) with the second surface (17) contacting the first surface (11);
wherein the activating device (2) and the sonotrode (3) have, respectively, a first and a second nodal surface (4, 5) parallel to each other; and the second surface (17) is located at a distance from the second nodal surface (5) of more than zero and less than L/4;
and the sealing device being **characterized in that** the second nodal surface (5) is located between the first nodal surface (4) and the second surface (17).

2. A sealing device (20) as claimed in Claim 1, wherein the sonotrode (3) has an axial cavity (16) engaged by the activating device (2); the second surface (17) being an end surface of the cavity (16).

## Patentansprüche

1. Ultraschallsiegelvorrichtung (20), umfassend:
eine Aktivierungsvorrichtung (2), die Schwingungen einer Wellenlänge eines gegebenen Wertes L erzeugt und eine erste Fläche (11) aufweist; und
eine Sonotrode (3), die eine zweite Fläche (17) aufweist und mit der Aktivierungsvorrichtung (2) verbunden ist, wobei die zweite Fläche (17) die erste Fläche (11) kontaktiert;
wobei die Aktivierungsvorrichtung (2) und die Sonotrode (3) eine entsprechende erste und eine zweite Knotenfläche (4, 5) aufweisen, die parallel zueinander sind; und die zweite Fläche (17) in einem Abstand von mehr als Null und weniger als L/4 von der zweiten Knotenfläche (5) angeordnet ist;
und die Siegelvorrichtung **dadurch gekennzeichnet ist, dass** die zweite Knotenfläche (5) zwischen der ersten Knotenfläche (4) und der zweiten Fläche (17) angeordnet ist.

2. Siegelvorrichtung (20) nach Anspruch 1, wobei die Sonotrode (3) einen mit der Aktivierungsvorrichtung (2) in Eingriff stehenden axialen Hohlraum (16) aufweist; wobei die zweite Fläche (17) eine Endfläche des Hohlraums (16) ist.

## Revendications

1. Dispositif de scellage par ultrasons comprenant :
un dispositif d'activation (2), qui génère des vibrations d'une longueur d'onde d'une valeur donnée L, et qui comporte une première surface (11) ; et
une sonotrode (3) comportant une seconde surface (17) et connectée au dispositif d'activation (2), la seconde surface (17) contactant la première surface (11) ;
dans lequel le dispositif d'activation (2) et la sonotrode (3) comportent, respectivement, des première et seconde surfaces nodales (4, 5) parallèles l'une à l'autre; et la seconde surface (17) est située à une certaine distance de la seconde surface nodale (5) qui est supérieure à zéro et inférieure à L/4 ;
et le dispositif de scellage étant **caractérisé en ce que** la seconde surface nodale (5) est située entre la première surface nodale (4) et la seconde surface (17).

2. Dispositif de scellage (20) selon la revendication 1, dans lequel la sonotrode (3) comporte une cavité axiale (16) recevant le dispositif d'activation (2) ; la seconde surface (17) étant une surface d'extrémité de la cavité (16).
